# EUROPÄISCHE PATENTSCHRIFT

(11) **EP 1 589 275 B1**
(45) Veröffentlichungstag und Bekanntmachung des Hinweises auf die Patenterteilung: **17.07.2013**
(21) Anmeldenummer: 05008435.9
(22) Anmeldetag: 19.04.2005
(51) Int. Cl.: F16L 55/105

(54) **Leitungssystem**
Conduit system
Système de conduite

(30) Priorität: 19.04.2004 DE 102004019403
(43) Veröffentlichungstag der Anmeldung: 26.10.2005
(73) Patentinhaber: Kaiser, Christof, 78576 Emmingen (DE)
(72) Erfinder: Kaiser, Christof, 78576 Emmingen (DE)
(74) Vertreter: Weiss, Peter

(56) Entgegenhaltungen:
- DE-C1- 19 949 926
- US-A- 5 797 423

## Beschreibung

Die Erfindung betrifft ein Leitungssystem nach den Merkmalen des Oberbegriffs des Anspruchs 1.

### Stand der Technik

Derartige Leitungssysteme sind in vielfältiger Form und Ausführung bekannt. Im allgemeinen bestehen Leitungssysteme aus einer Vielzahl von aneinandergereihten Profilen. An diese können Abzweigungen bzw. Anschlüsse zur Abnahme von Druckluft angebracht werden. Dabei wird an die gewünschte Stelle in der Aussenwand des Leitungssystems, an der sich der Abzweigkanal später befinden soll, mit einer Bohrschablone eine Öffnung gebohrt. Der Abzweigkanal oder Anschluss wird dort angesetzt und verschraubt.
Um die Öffnung in den Kanal des Profiles zu bohren, muss in den meisten Fällen die Druckluft abgestellt werden, da sonst Luft durch die Öffnung entweichen kann. Das Abstellen der Druckluft hat aber den Nachteil, dass an Arbeitsplätzen, an denen Druckluft gebraucht wird, nicht gearbeitet werden kann. Wird die Luft nicht abgestellt so ist die Bohrschablone so angelegt, dass die Druckluft über einen Schalldämpfer geführt ist. Die Öffnung im Profile wird mit einem Kugelhahn abgesperrt. Diese haben den Nachteil, dass sie sehr kostspielig sind.

In der DE 199 49 926 wird eine Abzweigung in einem Leitungssystem beschrieben. Hier wird ein Verbindungselement in hinterschnittene Nuten in das Profil eingesetzt und dort über Befestigungselemente befestigt. In seiner Mitte weist das Verbindungselement einen Abzweigungskanal auf, der an eine später gebohrte Öffnung in dem Kanal des Profils anschliesst.

Den nächstliegenden Stand der Technik stellt die US 5,797,423 dar. Diese offenbart eine Vorrichtung, bei der mittels eines Schiebers ein Flüssigkeitsstrom in einer Leitung abgesperrt bzw. vermindert werden kann, um eine Öffnung in die Leitung bzw. das Leitungssystem eindringen zu können.

### Aufgabe

Der folgenden Erfindung liegt nun die Aufgabe zugrunde eine Absperrung zu entwickeln, bei der die Druckluft weiter fliessen kann und die preisgünstig und einfach zu bedienen ist.

### Lösung der Aufgabe

Zur Lösung dieser Aufgabe führen die Merkmale des kennzeichnenden Teils des Anspruchs 1.

An ein Leitungssystem mit einer Vielzahl von aneinandergereihten Profilen soll an einer Stelle eine Abzweigung oder ein Anschluss angebracht werden. Hierzu wird ein Verbindungselement gemäss der DE 199 49 926 in hinterschnittene Nuten in das Profil eingesetzt und dort über Verbindungselemente befestigt.

Das Verbindungselement weist den Abzweigkanal auf, der später direkt an die Öffnung des Kanals des Profils anschliessen soll.

Der Schieber der zwischen die Öffnung des Kanals in dem Profil und dem Abzweigkanal des Verbindungselementes eingesetzt wird, weist einen rechteckigen Streifen von geringer Dicke auf. An den rechteckigen Streifen schliesst eine Grifflasche an. Dies hat den Vorteil, dass der Schieber besser zu handhaben ist.

In das Profil und/oder das Verbindungselement sind Längsrinnen eingebracht. Diese dienen dazu, den Schieber zu führen, was den Vorteil hat, dass dieser nicht wegrutschen kann, sondern genau in der für ihn vorgesehenen Position bleibt. Ausserdem erleichtern die Längsrinnen das Einschieben des Schiebers.

Um die Öffnung des Kanals bzw, um die Öffnung des Abzweigkanals herum ist bevorzugt ein Dichtring vorgesehen. Dieser liegt sowohl beim Verbindungselement als auch beim Profil in einer Ringnut, damit er ortsfest bleibt, wenn der Schieber eingeschoben wird. Der Dichtring presst den Schieber auf die jeweilige Öffnung und gewährleistet somit, dass nur eine geringe Menge an Luft beim Einschieben bzw. Herausschieben entweichen kann.

Somit braucht die Druckluft bei der Herstellung der Öffnung oder beim Unterbrechen der Verbindung von Hauptkanal zu Abzweigkanal nicht abgestellt zu werden. Solch ein Schieber ist einfach aufgebaut und somit auch einfach in der Herstellung, was sich positiv auf die Kosten auswirkt.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
Figur 1 - 3 geschnittene Seitenansichten eines erfndungsgemässen Leitungssystems in verschiedenen Gebrauchslagen:
Figur 4 - 6 geschnittene Seitenansichten eines weiteren Ausführungsbeispiels entsprechend Figur 1 in verschiedenen Gebrauchslagen;
Figur 7 eine Draufsicht auf einen Schieber;
Figur 8 eine Draufsicht auf das Verbindungselement gemäss Figur 3 oder 6 mit einem Schieber in Gebrauchslage;
Figur 9 eine Unteransicht des Verbindungselements gemäss Figur 3 oder 6 mit einem Schieber in Gebrauchslage.

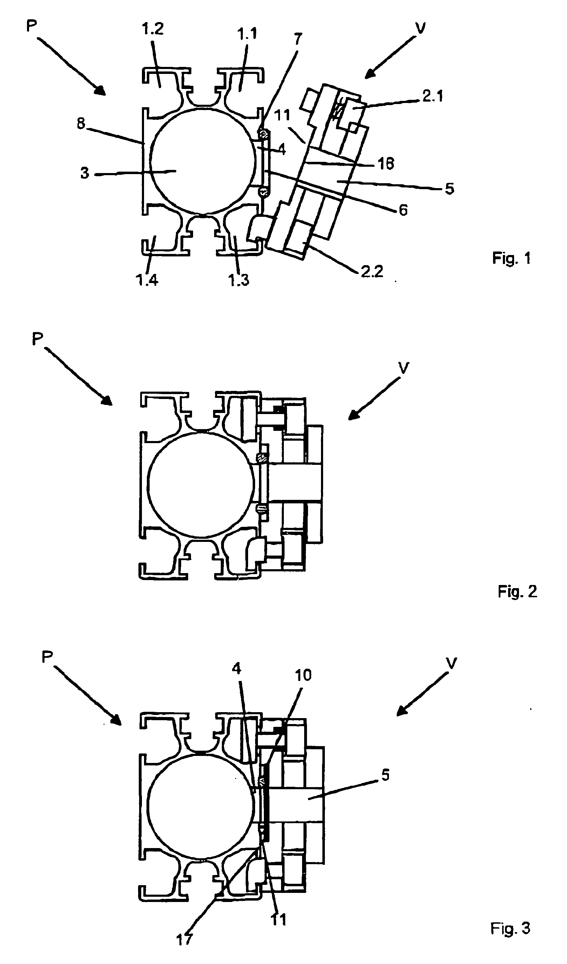

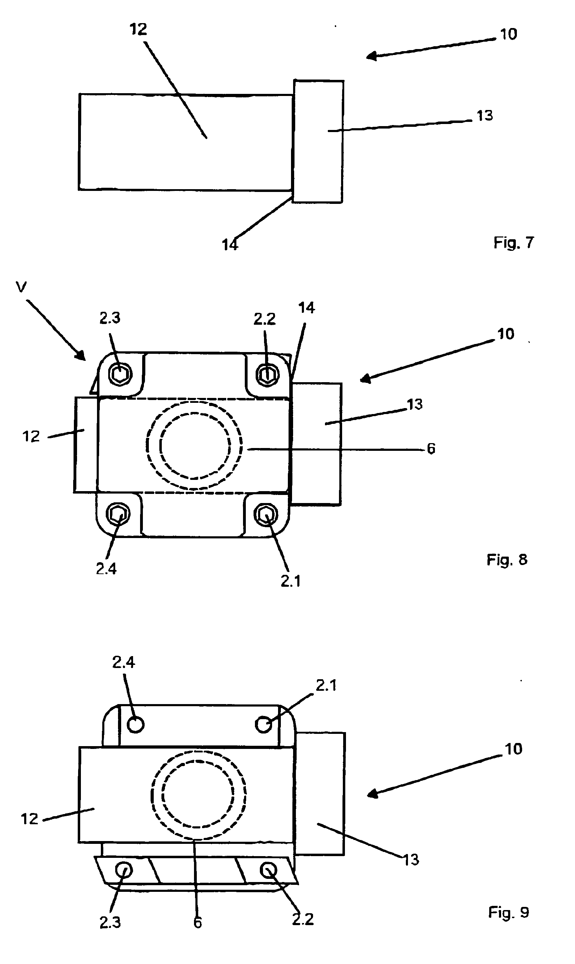

Gemäss den Fig. 1 und 2 wird ein Ausschnitt bzw. Profil P aus einem, in den Zeichnungen nicht aufgeführten Leitungssystem gezeigt. Das Profil P weist eingeformte, hinterschnittenen Nuten 1.1 - 1.4 auf, in die, wenn nötig, ein Verbindungselement V über Befestigungselemente 2.1 - 2.4 (siehe Fig. 8 und 9) schrittweise in das Profil P eingesetzt werden kann. An dieser Stelle wird auf die DE 199 49 926 Bezug genommen, da hier genau beschrieben wird, wie das Einsetzen des Verbindungselementes V in das Profil P funktioniert.

Durch das Profil P führt ein Kanal 3 durch den ein unter Druck stehendes Medium, beispielsweise Druckluft, geleitet wird. Der Kanal 3 besitzt eine Öffnung 4, an die das Verbindungselement V anschliesst, wobei die Druckluft durch die Öffnung 4 in einen Abzweigkanal 5 in dem Verbindungselement V gelangen kann.

Die Öffnung 4 in dem Kanal 3 und der Abzweigkanal 5 werden durch einen Dichtring 6 abgedichtet, welcher in einer Ringnut 7 um die Öffnung 4 des Kanals 3 herum eingelegt ist. Dieser besteht aus einem verformbaren Material, wie beispielsweise Gummi. So ist er an jede Form und Oberflächenbeschaffenheit anpassbar und bewirkt, dass keine Druckluft entweichen kann.

In eine Anlagefläche 17 des Verbindungselementes V ist eine Längsrinne 11 eingeformt. Zum Abtrennen des Abzweigkanals 5 von dem Kanal 3 wird gemäss Fig. 3 ein Schieber 10 oberhalb des Dichtrings 6 in die Längsrinne 11 in dem Verbindungselement V geschoben und trennt somit die Öffnung 4 und den Abzweigkanal 5 voneinander so, dass keine Druckluft mehr fliessen kann.

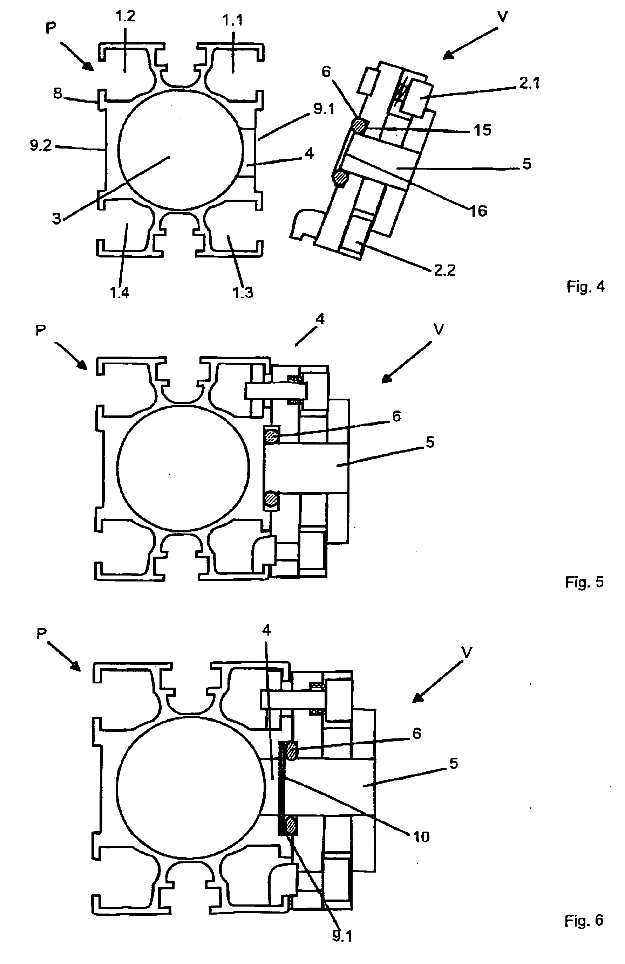

In einem weiteren Ausführungsbeispiel der Erfindung gemäss zumindest einer der Fig. 4 - 6 sind entlang zumindest einer Aussenwand 8 des Profils P Längsrinnen 9.1 und/oder 9.2 eingebracht. Dagegen ist der Dichtring 6 in diesem Ausführungsbeispiel in eine Ringnut 15 in dem Verbindungselement V eingelegt.

Gemäss Fig. 6 wird hier der Schieber 10 zwischen Profil P und Verbindungselement V unterhalb des Dichtrings 6 in die Längsrinne 9.1 eingeschoben und trennt die Öffnung 4 und den Abzweigkanal 5 voneinander.

Der Schieber 10, welcher für beide Ausführungsbeispiele verwendet werden kann, weist gemäss Fig. 7 einen bevorzugt rechteckigen Streifen 12 mit einer geringen Dicke, d, h. von wenigen Millimetern, auf. Eine Grifflasche 13 ist an dessen einem Ende fest, beispielsweise durch Verschweissung, mit ihm verbunden. Die Grifflasche 13 dient der besseren Handhabe des Schiebers 10.

Die Grifflasche 13 weist eine grössere Breite auf als der rechteckige Streifen 12. Somit bildet der Übergang von Grifflasche 11 zu dem rechteckigen Streifen 12 Schultern 14 aus. Die Schultern 14 verhindern, dass die Grifflasche 13 mit zwischen das Verbindungselement V und das Profil P geschoben wird.

In den Fig. 8 und 9 wird das Verbindungselement V samt eingeschobenem Schieber 10 gezeigt. Der rechteckige Streifen 12 befindet sich auf dem Dichtring 6. Die Grifflasche 13 steht mit den Schultern 14 seitlich an dem Verbindungselement V an.

Das Ausführungsbeispiel der Erfindung gemäss den Fig. 4 - 6 soll vor allem als Bohrlehre Anwendung finden.

### Dabei ist die Funktionsweise der Erfindung folgende:

An ein, in der Figur nicht gezeigtes, Leitungssystem aus einer Vielzahl von aneinandergereihten Profilen P soll eine Abzweigung angebracht werden. Dazu wird an die gewünschte Abzweigposition ein Verbindungselement V gemäss der DE 199 49 926 in die eingeformten, hinterschnittenen Nuten 1.1 - 1.4 in das Profil P eingesetzt und über die Befestigungselemente 2.1 - 2.3 an dem Profil P befestigt.

Nun wird mit einem Bohrer, welcher knapp dem Durchmesser des Abzweigkanals 5 entspricht, die Öffnung 4 in das Profil P gebohrt. Danach wird der Bohrer zurückgezogen, so dass er sich immer noch in dem Abzweigkanal 5 befindet und dafür sorgt, dass durch die Öffnung 4 nur wenig Druckluft entweichen kann.

Nun wird der Schieber 10 zwischen Profil P und Verbindungselement V in die Längsrinne 9.1 geschoben. Dieser wird von dem Dichtring 6 auf die Öffnung 4 des Kanals 3 gedrückt und verhindert, dass Druckluft entweichen kann. Der Bohrer kann nun aus dem Abzweigkanal 5 herausgezogen werden.

An das Verbindungselement V wird nun beispielsweise ein Druckluftabnehmer angesetzt. Nach Beendigung dieses Vorgangs, wird der Schieber 10 wieder aus der Längsrinne 9.1 herausgezogen und die Druckluft kann in den Abzweigkanal 5 fliessen.

## Patentansprüche

1. Leitungssystem für ein unter Druck stehendes Gas, insbesondere für Druckluft, mit einem Kanal (3) in einem Profil (P) zum Führen des Mediums und einer Öffnung (4) zum Kanal (3) hin, an welche ein Abzweigkanal (5) in einem Verbindungselement (V) anschliesst, wobei zwischen Öffnung (4) und Abzweigkanal (5) ein Schieber (10) einsetzbar ist,
**dadurch gekennzeichnet,**
**dass** das Profil (P) und/oder das Verbindungselement (V) eine Längsrinne (9.1, 9.2 und 11) zum Führen des Schiebers (10) aufweist.

2. Leitungssystem nach Anspruch 1, **dadurch gekennzeichnet, dass** der Schieber (10) eine Grifflasche (13) und einen daran anschliessenden etwa rechteckigen Streifen (12) aufweist.

3. Leitungssystem nach einem der Ansprüche 1 - 2, **dadurch gekennzeichnet, dass** um die Öffnung (4) des Kanals (3) bzw. um die Öffnung (16) des Abzweigkanals (5) herum ein Dichtring (6) vorgesehen ist.

4. Leitungssystem nach Anspruch 3, **dadurch gekennzeichnet, dass** der Dichtring (6) von einer Ringnut (15) in dem Verbindungselement (V) aufgenommen ist.

5. Leitungssystem nach Anspruch 3, **dadurch gekennzeichnet, dass** der Dichtring (6) in einer Ringnut (7) um die Öffnung (4) des Kanals (3) liegt.

## Claims

1. A piping system for a pressurised gas, in particular for compressed air, having a duct (3) in a shaped part (P) for guiding the medium and an opening (4) toward the duct (3), to which opening (4) there is connected a branch duct (5) in a connecting element (V), wherein a slide valve (10) is insertable between opening (4) and branch duct (5),
**characterised in that**
the shaped part (P) and/or the connecting element (V) has/have a longitudinal channel (9.1, 9.2 and 11) to guide the slide valve (10).

2. A piping system according to claim 1, **characterised in that** the slide valve (10) has a grip lug (13) and an adjoining substantially rectangular strip (12).

3. A piping system according to any one of claims 1-2, **characterised in that** a sealing ring (6) is provided around the opening (4) of the duct (3) or around the opening (16) of the branch duct (5).

4. A piping system according to claim 3, **characterised in that** the sealing ring (6) is received by an annular groove (15) in the connecting element (V).

5. A piping system according to claim 3, **characterised in that** the sealing ring (6) lies in an annular groove (7) around the opening (4) of the duct (3).

## Revendications

1. Système de conduite pour un gaz sous pression, en particulier pour de l'air comprimé, avec un canal (3) dans un profilé (P) destiné à guider le fluide et une ouverture (4) vers le canal (3) à laquelle vient se raccorder un canal de dérivation (5) dans un élément de connexion (V), entre l'ouverture (4) et le canal de dérivation (5) pouvant être placée une soupape à tiroir (10),
**caractérisé par le fait**
**que** le profilé (P) et/ou l'élément de connexion (V) présente une rainure longitudinale (9.1, 9.2 et 11) destinée à guider la soupape à tiroir (10).

2. Système de conduite selon la revendication 1, **caractérisé par le fait que** la soupape à tiroir (10) présente une languette de saisie (13) et une bande (12) environ rectangulaire qui vient s'y raccorder.

3. Système de conduite selon l'une des revendications 1 à 2, **caractérisé par le fait que** tout autour de l'ouverture (4) du canal (3) ou tout autour de l'ouverture (16) du canal de dérivation (5) est prévue une bague d'étanchéité (6).

4. Système de conduite selon la revendication 3, **caractérisé par le fait que** la bague d'étanchéité (6) est reçue par une rainure annulaire (15) dans l'élément de connexion (V).

5. Système de conduite selon la revendication 3, **caractérisé par le fait que** la bague d'étanchéité (6) se situe dans une rainure annulaire (7) autour de l'ouverture (4) du canal (3).
